# EUROPEAN PATENT SPECIFICATION

(11) **EP 0 396 426 B1**
(45) Date of publication and mention of the grant of the patent: **15.09.1993**
(21) Application number: 90304866.8
(22) Date of filing: 04.05.1990
(51) Int. Cl.: B60R 16/06, H05F 3/02, B65D 90/46

(54) **An earthing system**
Erdungssystem
Un système de mise à la terre

(30) Priority: 05.05.1989 GB 8910301
(43) Date of publication of application: 07.11.1990
(73) Proprietor: FDB ELECTRICAL LIMITED, London N3 2TJ (GB)
(72) Inventor: Carter, Donald Stanley, Feltham, Middlesex (GB); Newman, Michael Harvey, Slough SL1 5ST (GB)
(74) Representative: Rackham, Stephen Neil

(56) References cited:
- FR-A- 1 090 991
- FR-A- 1 189 891
- FR-A- 1 221 984
- FR-A- 1 489 445
- GB-A- 994 270
- US-A- 3 290 668

## Description

It is well known that vehicles, especially road vehicles and aircraft, which are mounted on rubber tyres accumulate large static charges as they move through the air. In some situations such as in the presence of inflammable gases or vapours these static charges can represent a considerable hazard if they result in the formation of a spark. A particular example of this is a road tanker of the type carrying a liquid fuel. At present, such tankers are earthed by their drivers carrying out a manual earthing operation after arrival at a depot but before entering the most hazardous area. It is then hoped that the relatively short distance between the earthing point and the hazardous enclosure where fuel is loaded onto or discharged from the tanker is sufficiently short not to accumulate substantial static charges on the vehicle. GB-A-994270 and US-A-3290668 both describe systems for earthing bulk liquid fuel tankers before transferring fuel into or from them. In both specifications means are provided to monitor the integrity of the earth connection which is established between the tanker and ground.

There already exists earth proving and monitoring units which check the maintenance of a reliable earth connection. An example of these conventional units made by us is the FDB EMGUARD which is particularly intended to be used on, for example, welding sites or construction sites where the maintenance of a reliable earth is vital and where the earth line is itself at risk due to accidental damage. In this system the earth monitor generates a low alternating voltage of approximately 7.5 volts to drive a proving current of approximately 35ma along a monitoring pilot line connected between the earth monitor and a load the earth connection of which is to be checked. The remote end of the monitoring pilot line at the load includes a pilot protection diode. The positive going alternate cycles applied to the monitoring pilot line pass through the pilot protection diode to the existing earth connection of the load and hence return to the earth monitoring equipment to enable the impedance of the earth line from the load to be monitored. The negative going cycles of the alternating current are blocked by the remote diode. The earth monitor checks that no current is passed during the negative going cycles. If any current is detected in the negative going cycles this indicates a short circuit between the monitoring pilot line and earth.

The FDB EMGUARD earth proving and monitoring unit whilst perfectly satisfactory for its intended fields of use cannot be used in hazardous areas such as those designated as zone 0 areas or zone 1 areas since the proving voltage and proving current could lead to the generation of a spark in the event of the disconnection or short circuit of the monitoring pilot line. To be intrinsically safe in such areas the proving voltage and current should be reduced to lower levels, typically below 2 volts and below say 30ma. If the loop current is reduced to such a low value in the system described above then the characteristics of the diode with respect to temperature means that it is no longer possible accurately to measure the resistance of the earth connection between the load being monitored and the earth monitoring unit.

To overcome these problems we developed another prior art system known as the FDB OHMGUARD which will be described in more detail subsequently but in which the monitoring line is formed by a screened lead or twisted pair. The core of the screened lead or one of the twisted pair is connected directly between the earth monitoring unit and the load whilst the screen of the screened lead or other of the twisted pair is connected between the earth monitoring unit and the remote diode. The integrity of the earth connection of the load is checked by a very low proving voltage and small proving current, typically 1.2 volts and 20 milliamps which passes through the core or the one of the twisted pair of the monitoring line to the load and returns via the earth connection of the load being monitored. The absence of any diode in the loop of one of the twisted pair or the core enables the resistance of the earth connection of the load to be monitored by the monitoring unit. Equally, the integrity of the screen or the other of the twisted pair of the monitoring line is continually monitored in the manner described above as a result of the presence of the diode connected between it and the load at the remote end of the monitoring pilot line. It is not necessary to check the absolute value of the resistance of this path merely that a connection is still established between the screen and the load. In the event of any cable damage of the monitoring line which, also indicate damage to the core or one of the twisted pair of the monitoring pilot line this is detected either as a result of a short between the screen and the core or between the two wires of the twisted pair or by a short between the screen and the earth or the other of the twisted pair and earth which provides a current during the negative going cycles of the proving current.

Whilst both of these earth monitoring and proving units satisfactorily monitor an earth connection once it is established, neither is directly useful for earthing vehicles in hazardous areas because the connection of an earth lead to such vehicle may result in the generation of a spark.

According to this invention an earthing system for earthing a vehicle in a hazardous area comprises:
a flying lead for connection to a vehicle chassis earthing point on the vehicle;
a monitoring line passing along the flying lead for connection to the vehicle chassis earthing point; and,
a proving circuit for proving the integrity of the earth connection between the flying lead and the vehicle, characterised in that the system further comprises
a contactor located in an explosion proof enclosure for connecting the flying lead and hence the vehicle to earth, and in which the flying lead is connected to the vehicle chassis earthing point, the proving circuit checking the resistance of the flying lead and the connection to the vehicle chassis earthing point and, if the connection is satisfactory, actuating the contactor to connect the earth line of the flying lead and hence the vehicle chassis earthing point to earth.

Preferably the current carried by the monitoring line is of an intrinsically safe nature so that no spark can be generated as the flying lead is connected to the earthing point vehicle chassis and preferably the monitoring line includes two separate connections one of which is connected directly to the vehicle chassis earthing point and the other of which is connected via a diode to the vehicle chassis earthing point so that the first connection can be used to monitor the absolute value of the resistive path between the vehicle chassis earthing point and the proving circuit whilst the second can be used to establish the integrity of the path.

It is particularly preferred that the vehicle carries a permanently installed connection such as a three pole jack plug and the end of the flying lead includes a complementary and preferably crush-proof socket. In this case it is preferred that the body of the jack plug is physically and electrically connected to the vehicle chassis earthing point, one of the poles of the jack plug is connected via the diode to the main body of the jack plug, whilst the other of the poles of the jack plug is connected via an insulated lead to the earthing point. In this way the unit not only checks the integrity and resistance of the flying lead but also checks the electrical resistance between the vehicle chassis earthing point of the vehicle and the casing of the jack plug mounted on its chassis which provides its main earthing connection when discharging static charges.

Preferably the proving circuit is enclosed within the explosion proof enclosure and an indicator and test button are mounted on the outside of the explosion proof housing to indicate that a satisfactory connection exists and enables the operation of the proving circuit to be checked.

Were the earthing system is used to earth the system before taking on or discharging fuel it is preferred that the earthing system is also interlocked to the fuel delivery or discharge pumps so that no pumping can take place until a satisfactory earth has been established and the static charges on the vehicle have been discharged by actuation of the contactor. In this way it becomes impossible to load or discharge fuel from a vehicle without it first having been satisfactorily earthed and so avoids any possibility of human error.

A particular example of earthing system in accordance with this invention will now be described with reference to the accompanying drawing: in which:-
Figure 1 is a circuit diagram of an FDB OHMGURAD installation;
Figure 2 is a diagram of the earthing system in accordance with the present invention
Figure 3 is a circuit diagram of the earthing system in accordance with the present invention; and,

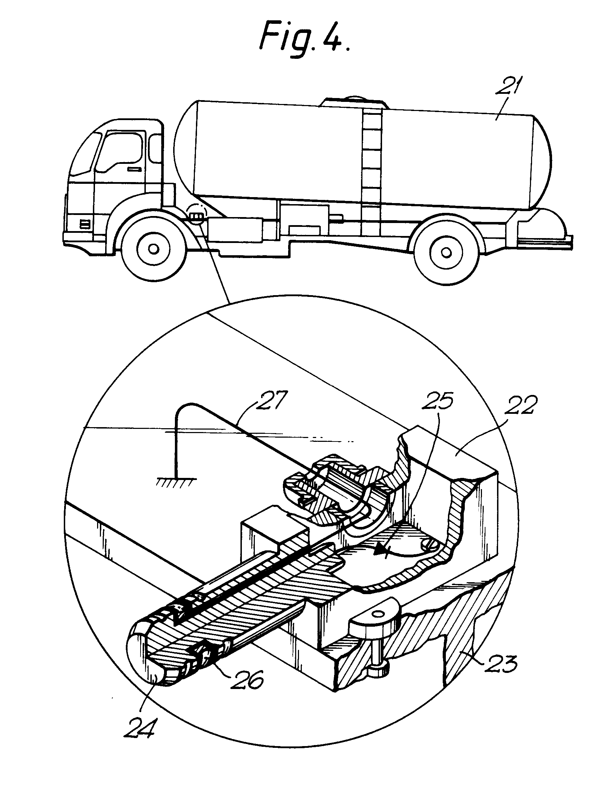

Figure 4 is a cut away perspective view of the vehicle chassis earthing point located on a liquid fuel tanker.

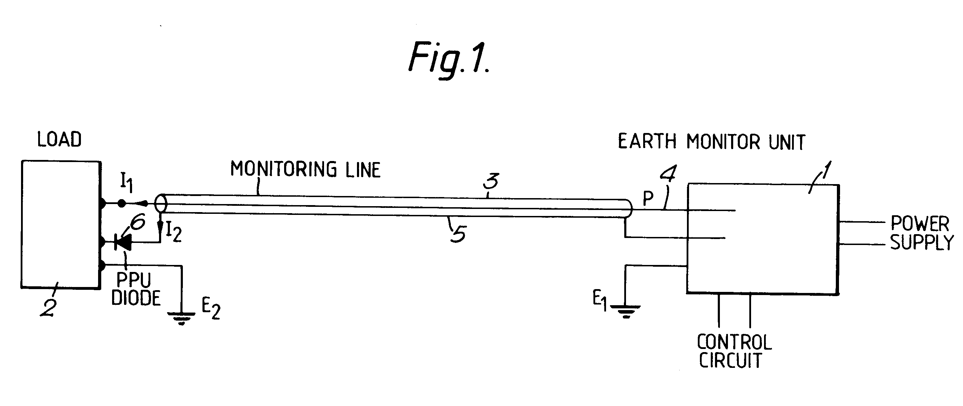

The earthing system in accordance with this invention incorporates a known earth proving and monitoring unit known as the FDB OHMGUARD manufactured by FDB Electrical Limited, Raynard Mills Trading Estate, Windmill Road, Brentford, Middlesex. The normal installation of such a unit is illustrated in Figure 1 with the unit 1 being connected to a load 2 to be monitored by a coaxial or twisted pair monitoring line 3. The core 4 or one of the twisted pair of the coaxial or twisted pair monitoring line 3 is directly connected between the monitoring unit 1 and the load 2 whilst the screen 5 or other of the twisted pair is connected via a diode 6 to the load 2. The load 2 is connected to earth by a connection at terminal E₂ and the monitoring unit 1 is also connected to earth via terminal E₁.

In use the earth monitoring unit 1 generates an alternating voltage of approximately 1.2 volts and drives a proving current of the order of 20ma along both the core 4 and screen 5 of the monitoring line 3. By monitoring the voltage and current applied to and flowing between the core 4 and the earth terminal E₁ the impedance of the earth of the load 2 is monitored by the monitoring unit 1. Equally, by monitoring the current flow between the screen 5 and the terminal E₁ and, in particular, monitoring that no negative going cycles of the alternating current result in a current passing between the screen 5 and the terminal E₁ it can be established that the screen 5 is not shorted to earth at any point along the length monitoring line 3.

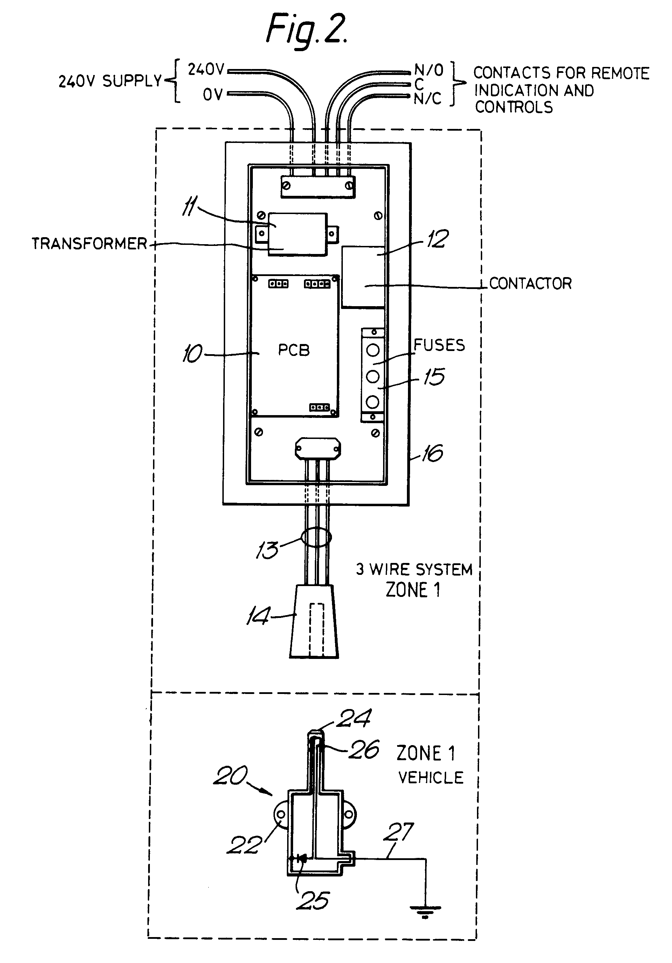

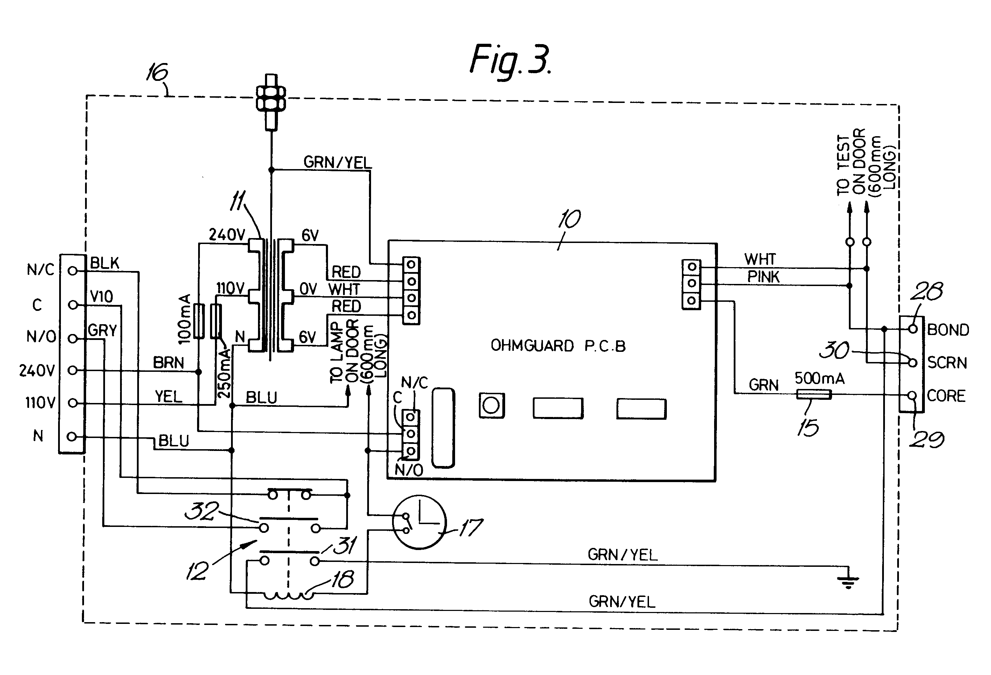

The earthing system in accordance with this invention is shown generally in Figure 2 and includes the conventional FDB OHMGUARD earth proving and monitoring unit 1 which is illustrated in Figure 2 by a printed circuit board 10 and transformer 11. The earthing system also includes a contactor 12 and a three core flexible flying lead 13 terminating in a crush-proof insulated three pole jack socket 14. The printed circuit board 10, transformer 11 and contactor 12 together with associated equipment such as fuses 15 are all located inside an explosion proof enclosure 16. The flying lead 13 and jack socket 14 extend out of the explosion proof enclosure 16 into a hazardous area such as a petrol tanker loading station. Also included in the explosion proof enclosure 16 is a delay timer 17 which is connected between the earth proving and monitoring unit 10 and an actuating coil 18 of the contactor 12 as shown in Figure 3.

The earthing system is completed by a jack plug 20 mounted on a road tanker 21. The jack plug 20 is a three pole jack plug with a body 22 made from brass which is physically and mechanically connected to a main chassis member 23 of the tanker 21 at the vehicle chassis earthing point. The outer pole 24 of the jack plug 20 is connected via a diode 25 to the main body 22 of the jack plug whilst the other pole 26 of the jack plug is connected via an insulated lead 27 to the vehicle chassis earthing point on the tanker 21.

When the tanker 21 arrives at the filing point the driver merely takes the socket 14 on the end of the flying lead 13 and connects it to the jack plug 20 mounted on the chassis 23. The OHMGUARD earth proving and monitoring device then monitors the resistance of the path from a terminal 28 along the earth connection of the flying lead 13 through the body 22 of the jack socket to the vehicle chassis earthing point by applying an alternating voltage to the terminal 29, a monitoring line in the flying lead 13, the pole 26 and the insulated cable 27. The OHMGUARD unit establishes the absolute value of the resistance of the path and ensures that it is below a predetermined threshold value. The OHMGUARD unit also ensures that no short circuit has occurred in the flying lead 13 or socket 14 by applying an alternating current to terminal 30 and hence through another line in the flying lead 13 equivalent to the screen 5 of the conventional OHMGUARD installation which is connected via pole 24 to a diode 25 which is in turn equivalent to the diode 6 of a conventional OHMGUARD installation. As with a conventional installation a loop is formed and any current resulting from the negative going voltage pulses applied to terminal 30 is assumed to result from some short circuit and hence fault in the flying lead 13. Assuming that the OHMGUARD earth proving and monitoring unit establishes that a satisfactory connection has been made between the flying lead 13 and the vehicle chassis earthing point, it then starts a delay timer 17 which, on timing out, applies an actuating current to the coil 18 of the contactor 12 to close contacts 31 of the contactor 12 to connect the earth terminal 28 of the flying lead 13, and hence the chassis of the tanker 21, to earth.

The contactor includes a further pair of contacts 32 which, in practice, are connected in series with a control for a fuel pump for loading fuel into the tanker 21 and thus, only when the tanker has been satisfactorily earthed by actuation of the contactor 12 can pumping of fuel into the tank commence. Preferably the explosion proof enclosure 16 also includes an indicator light to show when the tanker is satisfactorily connected and a test button to enable the operation of the OHMGUARD unit to be tested for a short circuit condition.

## Claims

1. An earthing system for earthing a vehicle (21) in a hazardous area comprising:
a flying lead (13) for connection to a vehicle chassis earthing point (23) on the vehicle (21);
a monitoring line (28,29,30) passing along the flying lead (13) for connection to the vehicle chassis earthing point (23); and,
a proving circuit (10) for proving the integrity of the earth connection (23,22,29) between the flying lead (13) and the vehicle (21), characterised in that the system further comprises
a contactor (12) located in an explosion proof enclosure (16) for connecting the flying lead (13) and hence the vehicle (21) to earth, and in which the flying lead (13) is connected to the vehicle chassis earthing point (23), the proving circuit (10) checking the resistance of the flying lead (13) and the connection to the vehicle chassis earthing point (23) and, if the connection is satisfactory, actuating the contactor (12) to connect the earth line (29) of the flying lead (13) and hence the vehicle chassis earthing point (23) to earth.

2. An earthing system according to claim 1, in which the current carried by the monitoring line (28,30) is of an intrinsically safe nature so that no spark can be generated as the flying lead (13) is connected to the vehicle chassis earthing point (23).

3. An earthing system according to claim 1, in which the vehicle (21) carries a permanently installed connection (20) such as a three pole jack plug and the end of the flying lead (13) includes a complementary socket.

4. An earthing system according to any one of the preceding claims, in which the monitoring line (28,30) includes two separate connections one of which (27) is connected directly to the vehicle chassis earthing point (23) and the other of which is connected via a diode (25) to the vehicle chassis earthing point (23) so that the first connection can be used to monitor the absolute value of the resistive path between the vehicle chassis earthing point (23) and the proving circuit (10) whilst the second can be used to establish the integrity of the path.

5. An earthing system according to claim 4 when dependent upon claim 3, in which the body (22) of the jack plug (20) is physically and electrically connected to the chassis (23) of the vehicle (21), one of the poles (24) of the jack plug (20) is connected via the diode (25) to the main body (22) of the jack plug (20), and the other of the poles (26) of the jack plug (20) is connected via an insulated lead (27) to the vehicle chassis earthing point (23) so that the earthing system also checks the electrical resistance between the main electrical earth point of the vehicle (21) and the casing (22) of the jack plug (20) mounted on its chassis (23) which provides its main earthing connection when discharging static charges.

6. An earthing system according to any one of the preceding claims, in which the proving circuit (10) is enclosed within the explosion proof enclosure (16) and an indicator and test button are mounted on the outside of the explosion proof enclosure (16) to indicate that a satisfactory connection exists and enable the operation of the proving circuit (10) to be checked.

7. An earthing system according to any one of the preceding claims, in which the earthing system is used to earth the system before taking on or discharging fuel, and in which the earthing system is also interlocked to fuel delivery or discharge pumps so that no pumping can take place until a satisfactory earth has been established and the static charges on the vehicle have been discharged by actuation of the contactor (12).

## Patentansprüche

1. Erdungssystem zum Erden eines Fahrzeugs (21) in einer Gefahrenzone, mit:
einer Anschlußleitung (13) für den Anschluß an einen Erdungspunkt (23) am Chassis des Fahrzeugs (21);
einer Überwachungsleitung (28, 29, 30), die entlang der Anschlußleitung (13) verläuft, für den Anschluß an den Erdungspunkt (23) des Fahrzeugchassis; und
einer Prüfschaltung (10) zum Prüfen der Integrität der Erdverbindung (23, 22, 29) zwischen der Anschlußleitung (13) und dem Fahrzeug (21),
dadurch gekennzeichnet, daß das System ferner aufweist:
ein in einem explosionsgeschützten Gehäuse (16) untergebrachtes Schaltschütz (12) zur Verbindung der Anschlußleitung (13) und damit des Fahrzeugs (21) mit Erde, in welchem die Anschlußleitung (13) mit dem Erdungspunkt (23) am Fahrzeugchassis verbunden wird, wobei die Prüfschaltung (10) den Widerstand der Anschlußleitung (13) und die Verbindung mit dem Erdungspunkt (23) am Fahrzeugchassis kontrolliert und bei zufriedenstellender Verbindung das Schaltschütz (12) betätigt, um den Erdleiter (29) der Anschlußleitung (13) und damit den Erdungspunkt (23) am Fahrzeugchassis mit Erde zu verbinden.

2. Erdungssystem nach Anspruch 1, wobei der in der Überwachungsleitung (28, 30) fließende Strom eigensicher ist, so daß bei der Verbindung der Anschlußleitung (13) mit dem Erdungspunkt (23) am Fahrzeugchassis keine Funkenbildung auftreten kann.

3. Erdungssystem nach Anspruch 1, wobei das Fahrzeug (21) einen fest installierten Anschluß (20) trägt, wie z.B. einen dreipoligen Buchsenstecker, und das Ende der Anschlußleitung (13) eine komplementäre Steckbuchse aufweist.

4. Erdungssystem nach irgendeinem der vorstehenden Ansprüche, wobei die Überwachungsleitung (28, 30) zwei getrennte Verbindungen enthält, deren eine (27) direkt an den Erdungspunkt (23) am Fahrzeugchassis angeschlossen wird, während die andere über eine Diode (25) an den Erdungspunkt (23) am Fahrzeugchassis angeschlossen wird, so daß die erste Verbindung zur Überwachung des absoluten Widerstandswerts des Strompfades zwischen dem Erdungspunkt (23) am Fahrzeugchassis und der Prüfschaltung (10) verwendet werden kann, während die zweite Verbindung dazu dienen kann, die Integrität (auch: Unversehrtheit) des Strompfades nachzuweisen.

5. Erdungssystem nach Anspruch 4, soweit dieser von Anspruch 3 abhängig ist, wobei der Hauptkörper (22) des Buchsensteckers (20) mechanisch und elektrisch mit dem Chassis (23) des Fahrzeugs (21) verbunden ist, während einer der Pole (24) des Buchsensteckers (20) über die Diode (25) mit dem Hauptkörper (22) des Buchsensteckers (20) und der andere Pol (26) des Buchsensteckers (20) über eine isolierte Leitung (27) mit dem Erdungspunkt (23) am Fahrzeugchassis verbunden ist, so daß das Erdungssystem auch den elektrischen Widerstand zwischen dem elektrischen Haupterdungspunkt des Fahrzeugs (21) und dem Gehäuse (22) des an seinem Chassis (23) montierten Buchsensteckers (20) kontrolliert, das beim Ableiten elektrostatischer Ladungen seine Haupterdverbindung bildet.

6. Erdungssystem nach irgendeinem der vorstehenden Ansprüche, wobei die Prüfschaltung (10) in dem explosionsgeschützten Gehäuse (16) eingeschlossen ist und an der Außenseite des explosionsgeschützten Gehäuses (16) eine Anzeigeeinrichtung und ein Prüftaste angebracht sind, um das Bestehen einer zufriedenstellenden Verbindung anzuzeigen und die Funktionskontrolle der Prüfschaltung (10) zu ermöglichen.

7. Erdungssystem nach irgendeinem der vorstehenden Ansprüche, wobei das Erdungssystem verwendet wird, um die Anlage vor der Übernahme oder dem Entladen von Kraftstoff zu erden, und wobei das Erdungssystem außerdem mit Kraftstofförder- oder -austragspumpen verriegelt ist, so daß der Pumpenbetrieb erst dann stattfinden kann, wenn eine zufriedenstellende Erdverbindung hergestellt worden ist und die auf dem Fahrzeug vorhandenen elektrostatischen Ladungen durch Betätigung des Schaltschützes (12) abgeleitet worden sind.

## Revendications

1. Système de mise à la terre, pour mettre à la terre un véhicule (21) dans une zone à risque, comprenant :
un conducteur volant (13) pour connexion à un point de mise à la terre de châssis de véhicule (23) sur le véhicule (21) ;
une ligne de contrôle (28, 29, 30) passant par le conducteur volant (13) pour connexion au point de mise à la terre de châssis de véhicule (23) ; et,
un circuit de vérification (10) pour vérifier l'intégrité de la connexion à la terre (23, 22, 29) entre le conducteur volant (13) et le véhicule (21),
caractérisé en ce que le système comprend en outre :
un contacteur (12) situé dans une enceinte anti-explosion (16) pour relier le conducteur volant (13) et par conséquent le véhicule (21) à la terre, et dans lequel le conducteur volant (13) est connecté au point de mise à la terre de châssis de véhicule (23), le circuit de vérification (10) contrôlant la résistance du conducteur volant (13) et la connexion au point de mise à la terre de châssis de véhicule (23) et, si la connexion est satisfaisante, actionnant le contacteur (12) pour connecter la ligne de terre (29) du conducteur volant (13), et par conséquent le point de mise à la terre de châssis de véhicule (23), à la terre.

2. Système de mise à la terre selon la revendication 1, dans lequel le courant transporté par la ligne de contrôle (28, 30) est d'une nature intrinsèquement sûre de sorte qu'aucune étincelle ne peut être produite lorsque le conducteur volant (13) est connecté au point de mise à la terre de châssis de véhicule (23).

3. Système de mise à la terre selon la revendication 1, dans lequel le véhicule (21) porte une connexion (20) installée de manière permanente comme une prise mâle tripolaire et l'extrémité du conducteur volant (13) comprend une prise complémentaire.

4. Système de mise à la terre selon l'une quelconque des revendications précédentes; dans lequel la ligne de contrôle (28, 30) comprend deux connexions distinctes dont l'une (27) est connectée directement au point de mise à la terre de châssis de véhicule (23) et dont l'autre est connectée par l'intermédiaire d'une diode (25) au point de mise à la terre de châssis de véhicule (23), de sorte que la première connexion peut être utilisée pour contrôler la valeur absolue du trajet résistif entre le point de mise à la terre de châssis de véhicule (23) et le circuit de vérification (10), tandis que la seconde peut être utilisée pour établir l'intégrité du trajet.

5. Système de mise à la terre selon la revendication 4 lorsqu'elle est dépendante de la revendication 3, dans lequel le corps (22) de la prise mâle (20) est physiquement et électriquement connecté au châssis (23) du véhicule (21), dans lequel l'un des pôles (24) de la prise mâle (20) est connecté par l'intermédiaire de la diode (25) au corps principal (22) de la prise mâle (20), et l'autre (26) des pôles de la prise mâle (20) est connecté, par l'intermédiaire d'un conducteur isolé (27), au point de mise à la terre de châssis de véhicule (23), de sorte que le système de mise à la terre contrôle également la résistance électrique entre le point principal de mise à la terre du véhicule (21) et le boîtier (22) de la prise mâle (20) montée sur son châssis (23) ce qui réalise sa connexion principale de mise à la terre lors de l'opération de décharge des charges statiques.

6. Système de mise à la terre selon l'une quelconque des revendications précédentes, dans lequel le circuit de vérification (10) est enfermé dans l'enceinte anti-explosion (16) et dans lequel un indicateur et un bouton de test sont montés à l'extérieur de l'enceinte anti-explosion (16) pour indiquer qu'une connexion satisfaisante est réalisée et pour permettre que le fonctionnement du circuit de vérification (10) soit testé.

7. Système de mise à la terre selon l'une quelconque des revendications précédentes, dans lequel le système de mise à la terre est utilisé pour mettre à la terre le système avant de charger ou de décharger du carburant, et dans lequel le système de mise à la terre soit également verrouillé de façon réciproque avec les pompes de délivrance ou d'évacuation de carburant de sorte qu'aucun pompage ne puisse avoir lieu jusqu'à ce qu'une mise à la terre satisfaisante ait été établie et que les charges statiques sur le véhicule aient été déchargées par la manoeuvre du contacteur (12).
